(19) Europäisches Patentamt / European Patent Office / Office européen des brevets

(11) **EP 3 293 847 B1**

(12) **FASCICULE DE BREVET EUROPEEN**

(45) Date de publication et mention
de la délivrance du brevet:
**10.04.2019 Bulletin 2019/15**

(51) Int Cl.:
*H02J 3/32* *(2006.01)*      *H02J 3/38* *(2006.01)*

(21) Numéro de dépôt: **17189499.1**

(22) Date de dépôt: **05.09.2017**

(54) **PROCÉDÉ DE CONTRÔLE D'UNE CENTRALE DE PRODUCTION ÉLECTRIQUE**

KONTROLLVERFAHREN EINES STROMERZEUGUNGSKRAFTWERKS

METHOD FOR CONTROLLING AN ELECTRIC GENERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.09.2016 FR 1658293**

(43) Date de publication de la demande:
**14.03.2018 Bulletin 2018/11**

(73) Titulaire: **Schneider Electric Industries SAS
92500 Rueil-Malmaison (FR)**

(72) Inventeurs:
- **PFLAUM, Peter
  38050 GRENOBLE Cedex 9 (FR)**
- **ALAMIR, Mazen
  38050 GRENOBLE Cedex 9 (FR)**

(74) Mandataire: **Brevalex
95, rue d'Amsterdam
75378 Paris Cedex 8 (FR)**

(56) Documents cités:
**FR-A1- 2 996 695**

- **HUG-GLANZMANN G: "Coordination of
  intermittent generation with storage, demand
  control and conventional energy sources", 2010
  IREP SYMPOSIUM BULK POWER SYSTEM
  DYNAMICS AND CONTROL - VIII (IREP 2010) :
  [BUZIOS], RIO DE JANEIRO, BRAZIL, 1 - 6
  AUGUST 2010, IEEE, PISCATAWAY, NJ, USA, 1
  août 2010 (2010-08-01), pages 1-7, XP031746873,
  ISBN: 978-1-4244-7466-0**

**Description**

## DOMAINE TECHNIQUE

La présente invention concerne un procédé de contrôle d'une centrale de production d'énergie renouvelable. Plus particulièrement, le procédé de contrôle de la centrale vise à prédire un profil de puissance destinée à être délivrée sur un réseau de distribution électrique avec un indice de confiance donné.

## ART ANTÉRIEUR

Les sources d'énergie renouvelables sont connues pour présenter un caractère intermittent et fluctuant qui doit en permanence être compensé par des sources de production d'énergie conventionnelles pour assurer la stabilité des réseaux de distribution électrique auxquels elles sont connectées.

Cette compensation impose cependant, aux sources de production d'énergie conventionnelles, des contraintes affectant leur fonctionnement et leur rendement. Ces contraintes sont d'autant plus importantes que les sources d'énergie renouvelable sont de plus en plus décentralisées (autrement dit à distance des sources de production conventionnelles).

Par ailleurs, la compensation des fluctuations par les sources de production d'énergie conventionnelles a une incidence directe sur la qualité de la tension et du courant délivrés au réseau de distribution d'électricité du fait de leur temps de réaction.

Par conséquent, l'essor des centrales de production d'énergie renouvelable nécessite de repenser leur fonctionnement et leur contrôle.

A cet égard, il est désormais imposé aux exploitants de centrales de production d'énergie renouvelable de déclarer en avance un profil de puissance qu'ils envisagent d'injecter sur le réseau de distribution.

Ainsi, le document US 8996187 propose un procédé de dimensionnement d'un système d'accumulation d'énergie destiné à compenser les effets de l'intermittence de sources de production d'énergie renouvelable. Plus particulièrement, ce procédé prend en compte les incertitudes des prévisions de production d'énergie renouvelable et de consommation par une approche stochastique afin d'équilibrer la production et la consommation d'énergie.

Le document FR2996695 décrit une méthode de pilotage d'une batterie de stockage.

Cependant, ce procédé n'est pas satisfaisant.

En effet, ce procédé a essentiellement pour objet le dimensionnement du système d'accumulation d'énergie et ne peut garantir, à son exploitant, une injection optimale sur le réseau de distribution d'électricité de la puissance produite par les sources de production d'énergie renouvelable.

Un but de la présente invention est alors de proposer un procédé de contrôle d'une centrale calibré de sorte qu'un maximum de puissance électrique, compte tenu des contraintes qui lui sont imposées, puisse être injecté sur le réseau de distribution électrique.

Un autre but de la présente invention est également de proposer une méthode de calibration permettant d'optimiser le procédé de contrôle de la centrale. Plus particulièrement, la méthode de calibration est destinée à garantir, avec un indice de confiance connu, qu'une quantité de puissance minimale puisse être injectée sur le réseau de distribution électrique.

## EXPOSÉ DE L'INVENTION

Les buts de l'invention sont au moins en partie atteints par un procédé de contrôle d'une centrale de production d'énergie électrique comprenant au moins une source d'énergie renouvelable, au moins un système d'accumulation d'énergie, le procédé comprenant :

une étape de détermination, par un module optimal, d'un profil de puissance $P_G$ à déclarer, le profil de puissance $P_G$ étant un profil d'une puissance destinée à être délivrée sur une période temporelle T, débutant à un instant $t_0$, par la centrale de production d'énergie électrique, le profil de puissance $P_G$ étant déterminé par rapport à une prévision de production de profil de puissance $P_R$ de l'au moins une source d'énergie renouvelable, et correspondant à un profil de puissance P(t) permettant de maximiser une fonction objectif F de la forme :

$$ F = \sum_{t=t_0}^{t_0+T} \left( \boldsymbol{P(t)} - \rho . \| \boldsymbol{SOC(t)} - \theta_1 . C_{bat} \| \right) $$

P(t) étant une puissance à un instant t de la période T, SOC(t) un état de charge, ajustable, du système d'accumulation d'énergie à un instant t de la période T, $\rho$ est un facteur de pondération, et $C_{bat}$ étant la capacité du système d'accumulation d'énergie,

le profil de puissance $P_G$ étant soumis à une contrainte de la forme :

$$P_G \leq \theta_2 . P_R - P_{bat}$$

$P_{bat}$ étant la puissance consommée par le système d'accumulation d'énergie,

les grandeurs $\theta_1$ et $\theta_2$ correspondant à des composantes d'un vecteur de conception $\theta$ prédéterminé.

Le vecteur de conception $\theta$ représente avantageusement un état de calibration du procédé de contrôle d'une centrale de production d'énergie électrique, selon l'invention. Plus particulièrement, le vecteur de conception $\theta$ est adapté pour assurer, avec un degré de confiance connu, la fourniture d'un maximum de puissance produite par la source d'énergie renouvelable et conforme au profil de puissance $P_G$ à déclarer.

Selon un mode de mise en oeuvre, le procédé comprend en outre une étape de régulation, exécutée par un module temps réel, destiné à ajuster, en temps réel, l'état de charge SOC(t) de manière à réguler une puissance $P_E$, effectivement délivrée par la centrale de production d'énergie électrique, conforme, et dans une plage de tolérance donnée, au profil de puissance $P_G$.

Selon un mode de mise en oeuvre, l'état de charge SOC(t) du système d'accumulation d'énergie doit respecter la contrainte suivante pour chaque instant t de la période T :

$$0{,}05 . C_{bat} \leq SOC(t) \leq 0{,}95 . C_{bat}$$

Selon un mode de mise en oeuvre, la puissance $P_{bat}$ consommée par le système d'accumulation d'énergie (30) est maintenu entre une puissance minimale $P_{batmin}$ et une puissance maximale $P_{batmax}$.

Selon un mode de mise en oeuvre, l'état de charge SOC(t) à chaque instant t varie selon une fonction linéaire de la puissance $P_{bat}$ consommée, avantageusement, l'état de charge SOC(t) est tel que :

$$SOC(t) = SOC_0 + \alpha . \sum_{\tau=t_0}^{t} P_{bat}^{\tau}$$

$SOC_0$ étant l'état de charge à l'instant $t_0$, $P_{bat}^{\tau}$ étant la puissance consommée par le système d'accumulation à l'instant $\tau$, et $\alpha$ un paramètre fixe caractéristique du système d'accumulation d'énergie.

Selon un mode de mise en oeuvre, la pente en tout point du profil de puissance $P_G$ est bornée par une pente négative $dP_{G-}$ et une pente positive $dP_{G+}$.

Selon un mode de mise en oeuvre, le procédé comprend en outre la détermination du vecteur de conception $\theta$, la détermination du vecteur de conception comprenant :

a) une étape de sélection, sur une période Tp passée débutant à un instant $t_0$, d'une prévision de production de profil de puissance $P_{RP}$, de l'au moins une source d'énergie renouvelable,

b) une étape de calcul, pour la prédiction de production de profil puissance $P_{RP}$, d'un nombre n, entier, de profils de puissance $P_{Ri}$, avec i variant entre 1 et n, les profils de puissance $P_{Ri}$ rendant chacun compte d'une incertitude dont est entachée la prévision $P_{RP}$,

c) une étape de définition d'un premier ensemble de m valeurs $\theta_{1,l}$, l étant un nombre entier variant entre 1 et m, et d'un second ensemble de p valeurs $\theta_{2,k}$, k étant un nombre entier variant entre 1 et p,

d) une étape de calcul, pour la période Tp, pour chacun des m*p couples de valeurs $(\theta_{1,l}, \theta_{2,k})$, l et k variant respectivement entre 1 et m, et entre 1 et p, d'un profil de puissance $P(t)_{l,k}$, noté $P_{G,l,k}$ et maximisant une fonction $F_{l,k}$ :

$$F_{l,k} = \sum_{t=t_0}^{t_0+Tp} \left( P(t)_{l,k} - \rho . \left\| SOC(t) - \theta_{1,l} . C_{bat} \right\| \right)$$

et $P_{G,l,k}$ respectant la contrainte :

$$P_{G,l,k} \leq \theta_{2,k}.P_R - P_{bat}$$

$\rho$ étant un facteur de pondération, et SOC(t) et $C_{bat}$ étant, respectivement, un état de charge ajustable et une capacité du système d'accumulation d'énergie,

e) une étape de simulation de mise en oeuvre d'un module temps réel, pour chaque profil de puissance $P_{G,l,k}$ déterminé à l'étape d., et considérant que la source d'énergie renouvelable délivre un profil de puissance $P_{Ri}$ déterminé à l'étape b), le module temps réel étant destiné à ajuster, en temps réel, l'état de charge SOC(t) du système d'accumulation d'énergie de manière à réguler une puissance $P_{E,l,k,i}$, effectivement délivrée par la centrale de production d'énergie électrique, conforme au profil de puissance $P_{G,l,k}$, l'étape de simulation comprenant également le calcul des m*p écarts relatifs, $S_{l,k,i}$, entre les profils de puissance $P_{E,l,k,i}$, et $P_{G,l,k}$, un indicateur de performance $I_{l,k,i}$ égal à zéro étant attribué à l'écart relatif $S_{l,k,i}$, dès lors que ledit écart est inférieur à un écart seuil Es, l'indicateur de performance $I_{l,k,i}$ étant égal à un dans le cas contraire, l'étape e) étant exécutée pour chaque profil de puissance $P_{Ri}$ calculé à l'étape b),

f) une étape de calcul, pour chaque couple d'indice l et k, de la somme $I_{l,k} = \sum_{i=1}^{n} I_{l,k,i}$ , le vecteur de conception $\theta$ comprenant un couple de composantes $(\theta_1, \theta_2)$ sélectionnées parmi les couples de valeurs $(\theta_{1,l}, \theta_{2,k})$ pour lequel la somme $I_{l,k}$ est inférieure à un nombre entier positif q prédéterminé.

Selon un mode de mise en oeuvre, dès lors qu'une pluralité de couples $(\theta_{1,l}, \theta_{2,k})$ est sélectionnée à l'étape f), le procédé comprend en outre une étape de sélection supplémentaire d'un couple $(\theta_{1,l}, \theta_{2,k})$ parmi la pluralité de couples sélectionnés, le couple sélectionné lors de l'étape supplémentaire étant le couple $(\theta_{1,l}, \theta_{2,k})$ associé au profil de puissance $P_{G,l,k}$ présentant l'aire la plus importante.

Selon un mode de mise en oeuvre, le nombre n de profils de puissance $P_{Ri}$, est tel que :

$$n \geq \frac{1}{\eta}\left(\frac{e}{e-1}\right)\left(ln\frac{m.p}{\delta} + q\right)$$

$\eta$ étant un paramètre de précision compris entre 0 et 1, avantageusement inférieur à 0,1, $\delta$ un indicateur de confiance compris entre 0 et 1 avantageusement inférieur à 0,1.

Selon un mode de mise en oeuvre, le premier ensemble de m valeurs $\theta_{1,l}$ comprend l'ensemble de valeurs {0,3 ; 0,5 ; 0,7}.

Selon un mode de mise en oeuvre, le second ensemble de p valeurs $\theta_{2,k}$ comprend l'ensemble de valeurs {0,9 ; 0,95 ; 1 ; 1,05 ; 1,1}.

## BRÈVE DESCRIPTION DES DESSINS

D'autres caractéristiques et avantages apparaîtront dans la description qui va suivre des modes de mise en oeuvre du procédé de contrôle d'une centrale de production d'énergie électrique, donnés à titre d'exemples non limitatifs, en référence aux dessins annexés dans lesquels :

- la figure 1 est une représentation schématique d'une centrale de production d'énergie électrique destinée à être contrôlée par le procédé selon l'invention,
- la figure 2 est un schéma de principe de mise en oeuvre du procédé de détermination d'un vecteur de conception $\theta$ associé à une centrale de production d'énergie électrique selon l'invention,
- la figure 3 est une représentation graphique de la puissance maximale (axe vertical) qu'une centrale de production d'électricité contrôlée par le procédé de contrôle selon l'invention peut espérer injecter sur le réseau de distribution en fonction du paramètre $\theta_2$ (axe horizontal) pour différente capacités de source d'accumulation d'énergie $C_{bat}$,
- les figures 4a-4d sont des représentations graphiques en fonction du temps (axe horizontal) d'une comparaison de la puissance effectivement produite par la centrale de production d'électricité, et de la prévision des profils de production de puissance (lignes avec des points) pour quatre instants de prévision différents, selon l'invention,
- la figure 5a est une représentation graphique de puissances déclarées $P_{G1}$, $P_{G2}$, $P_{G3}$, et de la puissance $P_E$ effectivement délivrée (axe vertical) en fonction du temps (axe horizontal) par la centrale de production d'énergie électrique contrôlée par le procédé de contrôle selon la présente invention,
- la figure 5b est une représentation graphique de l'état de charge SOC du système d'accumulation d'énergie (axe vertical) en fonction du temps.

## EXPOSÉ DÉTAILLÉ DE MODES DE RÉALISATION PARTICULIERS

La présente invention met en oeuvre un procédé de contrôle d'une centrale de production d'électricité comprenant au moins une source d'énergie renouvelable et un système d'accumulation d'énergie.

L'invention est essentiellement basée sur l'idée que les exploitants de centrales de production d'électricité, et plus particulièrement les centrales comprenant des sources d'énergie intermittente ou renouvelable, doivent pouvoir s'engager, auprès d'un gestionnaire de réseau de distribution électrique, sur un profil de puissance que ladite centrale va pouvoir délivrer sur une période temporelle à venir. Le profil de puissance déclaré doit, en outre, respecter des contraintes imposées par le gestionnaire du réseau de distribution d'électricité. Le non-respect de cet engagement peut être sujet à des pénalités, par exemple des pénalités financières. Il incombe alors à l'exploitant d'optimiser au mieux le contrôle de la centrale de production d'électricité pour maximiser la puissance électrique injectée sur le réseau, tout en respectant, dans la mesure du possible sur une certaine plage de tolérance, l'engagement de profil de puissance.

Tout au long de la description, par nombre entier, nous entendons nombre entier positif.

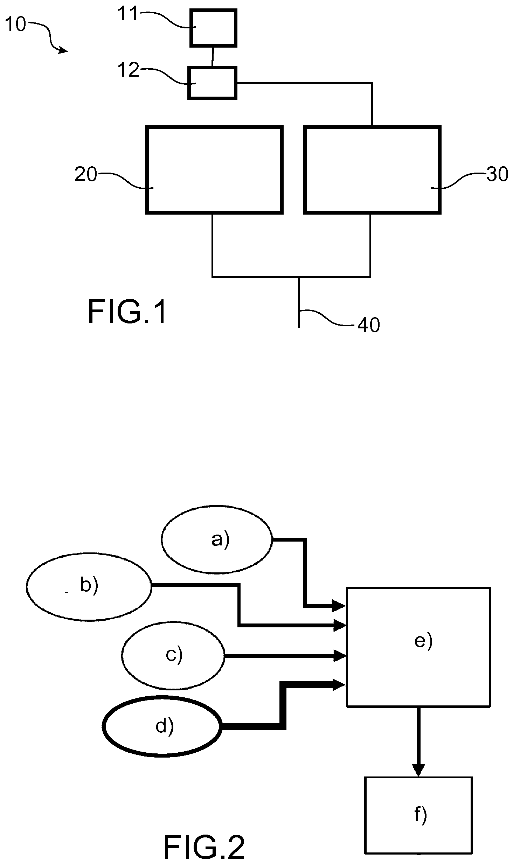

Le procédé selon l'invention concerne alors le contrôle d'une centrale de production d'énergie électrique 10 représentée à la figure 1.

La centrale de production d'énergie électrique 10 comprend au moins une source d'énergie renouvelable 20. La source d'énergie renouvelable 20 présente un caractère intermittent, autrement dit, elle peut être soumise à certains aléas, par exemple des aléas climatiques, qui rendent sa production d'énergie incertaine, et donc peu prévisible. La source d'énergie renouvelable 20 peut comprendre au moins une des sources choisie parmi : une source d'énergie photovoltaïque, une source d'énergie éolienne.

La centrale de production d'énergie électrique 10 comprend également au moins un système d'accumulation d'énergie 30. Le système d'accumulation d'énergie peut comprendre une batterie, un supercondensateur.

Le procédé selon l'invention comprend une étape de détermination, par un module optimal 11, d'un profil de puissance $P_G$ à déclarer.

Par profil de puissance, nous entendons une évolution de la puissance en fonction du temps.

Plus particulièrement, le profil de puissance $P_G$ est un profil d'une puissance destiné à être délivrée, sur une période temporelle T débutant à un instant $t_0$, par la centrale de production d'énergie électrique 10.

La période temporelle est par exemple une période de vingt-quatre heures ou de quarante-huit heures. L'instant $t_0$ peut correspondre au début d'une journée.

La détermination du profil de puissance $P_G$ est exécutée avant l'instant $t_0$, par exemple vingt-quatre heures avant l'instant $t_0$. Ainsi une déclaration du profil de puissance $P_G$ peut intervenir vingt-quatre heures avant l'instant $t_0$. Après une première déclaration du profil de puissance $P_G$, l'exploitant de la centrale de production d'énergie électrique peut se voir offrir la possibilité de corriger sa déclaration à la hausse comme à la baisse.

Selon l'invention, le profil de puissance $P_G$ est déterminé par rapport à une prévision de production de profil de puissance $P_R$ de l'au moins une source d'énergie renouvelable 20, et correspond, par ailleurs, à un profil de puissance P(t) permettant de maximiser une fonction objectif F de la forme :

$$F = \sum_{t=t_0}^{t_0+T} \left( \boldsymbol{P}(t) - \rho.\|\boldsymbol{SOC(t)} - \theta_1.C_{bat}\| \right)$$

P(t) est une puissance à un instant t de la période T, SOC(t) un état de charge, ajustable, du système d'accumulation d'énergie 30 à un instant t de la période T, $\rho$ est un facteur de pondération, et $C_{bat}$ est la capacité du système d'accumulation d'énergie 30.

Le profil de puissance $P_G$ est également soumis à une contrainte de la forme :

$$P_G \leq \theta_2.P_R - P_{bat}$$

où $P_{bat}$ est la puissance consommée par le système d'accumulation d'énergie 30.

Par puissance consommée $P_{bat}$, nous entendons une puissance effectivement consommée dès lors que $P_{bat}$ est positive, et une puissance délivrée par le système d'accumulation 30 dès lors que $P_{bat}$ est négative.

Les grandeurs $\theta_1$ et $\theta_2$ sont des composantes d'un vecteur de conception $\theta$.

Le terme $\theta_1$ est un terme de calibration du vecteur de conception $\theta$ destiné à donner une préférence à un niveau d'état de charge SOC du système d'accumulation d'énergie 30. Il peut être choisi de manière arbitraire en fonction des spécificités du système d'accumulation d'énergie (Par exemple, $\theta_1 = 0,3$ tend à favoriser un état de charge du système d'accumulation à 30 %).

Le terme $\theta_2$ est un terme d'adaptabilité de l'amplitude du profil $P_G$ à déclarer, permettant d'assurer que la puissance $P_G$ ne dépasse pas la prévision de production de puissance $P_R$ moins la puissance $P_{bat}$ consommée par le système d'accumulation d'énergie 30. Le terme $\theta_2$ peut être choisi, par exemple, en fonction d'une incertitude de la prévision de production de puissance $P_R$. Ladite incertitude peut être connue, ou tout simplement estimée en fonction d'une expérience passée.

Une détermination possible du vecteur de conception permettant de garantir un taux d'injection de la puissance effectivement produite par la source d'énergie renouvelable 20 avec un indice de confiance déterminé par ledit terme $\theta_2$ sera exposé dans la suite de l'exposé de l'invention.

Le vecteur de conception $\theta$ correspond à un état de calibration du procédé de contrôle de la centrale de production d'énergie électrique 10, et est destiné à prendre en compte la caractère incertain de la prévision de production de profil de puissance $P_R$ de l'au moins une source d'énergie renouvelable 20. En effet, la prévision de production de profil de puissance $P_R$ est en générale basée sur des prévisions météorologiques, et présente par conséquent un degré d'incertitude. Les composantes du vecteur de conception $\theta$ sont ajustées dès la mise en place de la centrale de production d'énergie électrique 10 de manière à garantir une exploitation de ladite centrale au meilleur de sa capacité tout en respectant les contraintes imposées par le gestionnaire du réseau de distribution d'électricité 40.

La maximisation de la fonction objectif F peut être exécutée par des méthodes numériques connues de l'homme du métier.

La détermination du profil $P_G$ est avantageusement exécutée à l'aide d'un calculateur, par exemple un ordinateur, plus particulièrement un ordinateur contrôlant le fonctionnement de la centrale de production d'énergie électrique 10.

Nous notons dès à présent que le profil de puissance $P_G$ est calculé pour des instants discrets, par exemple à intervalles de temps $\Delta t$ réguliers. Les intervalles de temps $\Delta t$ peuvent prendre au moins une des valeurs choisie parmi : 1 minute, 5 minutes, 10 minutes ; 15 minutes, 20 minutes, 30 minutes, 60 minutes.

De manière avantageuse, le procédé comprend en outre une étape de régulation. Ladite étape de régulation peut être exécutée par un module temps réel 12. Le module temps réel 12 est, pour sa part, destiné à ajuster, en temps réel (autrement dit pendant la période T), l'état de charge SOC(t) du système d'accumulation d'énergie 30 de manière à réguler une puissance $P_E$, effectivement délivrée par la centrale de production d'énergie électrique 10, conforme, et dans une plage de tolérance donnée, au profil de puissance $P_G$.

Par conforme au profil de puissance $P_G$ dans une gamme de tolérance donnée, nous entendons que le profil de puissance $P_E$, effectivement délivré, peut dévier du profil de puissance $P_G$ de plus ou moins douze pourcents ($\pm 12$ %), avantageusement de plus ou moins six pourcents ($\pm 6$ %).

D'autres contraintes peuvent être imposées par le gestionnaire du réseau de distribution d'électricité 40, ou être des contraintes techniques des éléments constitutifs du réseau.

Par exemple, il peut être imposé un état de charge minimum, et un état de charge maximum du système d'accumulation d'énergie 30. Par exemple, l'état de charge SOC(t), à chaque instant t de la période T, du système d'accumulation d'énergie peut être compris entre 5% et 95% de sa capacité d'accumulation $C_{bat}$, à savoir $0,05. C_{bat} \leq SOC(t) \leq 0,95. C_{bat}$.

Par ailleurs, il peut également être nécessaire d'imposer des limites de puissance consommée par le système d'accumulation d'énergie 30, par exemple la puissance $P_{bat}$ consommée par le système d'accumulation d'énergie 30 est maintenue entre une puissance minimale $P_{batmin}$ et une puissance maximale $P_{batmax}$.

La détermination du profil de puissance $P_G$ peut également être contrainte par l'équation de charge du système d'accumulation d'énergie 30. En effet, la variation maximale de l'état de charge SOC(t) est proportionnelle à la puissance consommée $P_{bat}$ par ledit système 30. Ainsi, l'état de charge SOC(t) du système 30 peut être tel que :

$$SOC(t) = SOC_0 + \alpha. \sum_{\tau=t_0}^{t} P_{bat}^{\tau}$$

où $SOC_0$ est l'état de charge à l'instant $t_0$, $P_{bat}^{\tau}$ étant la puissance consommée par le système d'accumulation 30 à l'instant $\tau$, et $\alpha$ un paramètre fixe caractéristique du système d'accumulation d'énergie 30, pouvant prendre deux valeurs différente selon que le système est en phase de charge ou de décharge.

L'exploitant peut également imposer une contrainte sur la pente du profil $P_G$. Nous appelons pente du profil $P_G$, la différence entre deux valeurs successives discrètes calculées à l'étape de détermination, par un module optimal 11, d'un profil de puissance $P_G$ à déclarer. La pente en tout point du profil de puissance $P_G$ est bornée par une pente négative $dP_{G-}$ et une pente positive $dP_{G+}$.

L'invention concerne également un procédé de détermination du vecteur de conception d'une centrale de production d'énergie électrique 10 comprenant au moins une source d'énergie renouvelable 20, au moins un système d'accumulation d'énergie 30.

Ce procédé de détermination n'est donné qu'à titre d'exemple, et est destiné à fournir un vecteur de conception optimisé afin de garantir un taux d'injection de la puissance effectivement produite par la source d'énergie renouvelable 20 avec un indice de confiance donné.

Le procédé (illustré à la figure 2) de détermination du vecteur de conception $\theta$ comprend une étape a) de sélection, sur une période Tp passée débutant à un instant $t_0$, d'une prévision de production de profil de puissance $P_{RP}$, de l'au moins une source d'énergie renouvelable 20. La prévision peut, par exemple, être basée sur des prévisions de paramètres (par exemple des paramètres météorologiques) influençant la production de puissance de la source d'énergie renouvelable 20.

La période Tp passée est par exemple un jour représentatif de l'année. Plusieurs périodes Tp passées peuvent être considérées pour tenir compte du caractère saisonnier des prédictions.

Le procédé de détermination du vecteur de conception $\theta$ comprend, également, une étape b) de calcul, pour la prédiction passée de production de puissance $P_{RP}$, d'un nombre n, entier, de profils de puissance $P_{Ri}$, avec i variant entre 1 et n, les profils de puissance $P_{Ri}$ rendant chacun compte d'une incertitude dont est entachée la prévision $P_{RP}$.

Les profils de puissance $P_{Ri}$ peuvent être générés par un générateur d'incertitude. A titre d'exemple, l'homme du métier trouvera dans le document [1], cité à la fin de la description, les éléments nécessaires à la mise en oeuvre d'un générateur d'incertitude.

Les n profils de puissance $P_{Ri}$ sont représentatifs des écarts pouvant survenir par rapport à la prédiction passée de production de puissance $P_{RP}$.

Le procédé de détermination du vecteur de conception $\theta$ comprend une étape c. de définition d'un premier ensemble de m valeurs $\theta_{1,l}$, l étant un nombre entier variant entre 1 et m, et d'un second ensemble de p valeurs $\theta_{2,k}$, k étant un nombre entier variant entre 1 et p.

Par exemple, le premier ensemble de m valeurs $\theta_{1,l}$ comprend l'ensemble de valeurs {0,3 ; 0,5 ; 0,7}.

De manière équivalente, le second ensemble de p valeurs $\theta_{2,k}$ comprend l'ensemble de valeurs {0,9 ; 0,95 ; 1 ; 1,05 ; 1,1}.

Le procédé de détermination du vecteur de conception $\theta$ comprend une étape d) de calcul, pour la période Tp, pour chacun des m*p couples de valeurs $(\theta_{1,l}, \theta_{2,k})$, l et k variant respectivement entre 1 et m, et entre 1 et p, d'un profil de puissance $P(t)_{l,k}$, noté $P_{G,l,k}$ et maximisant une fonction $F_{l,k}$

$$F_{l,k} = \sum_{t=t_0}^{t_0+Tp} \left( P(t)_{l,k} - \rho.\left\| SOC(t) - \theta_{1,l}.C_{bat} \right\| \right)$$

et $P_{G,l,k}$ respectant la contrainte :

$$P_{G,l,k} \leq \theta_{2,k}.P_R - P_{bat}$$

$\rho$ étant un facteur de pondération, et $SOC(t)$ et $C_{bat}$ étant, respectivement, un état de charge ajustable et une capacité du système d'accumulation d'énergie 30.

La détermination des profils $P_{G,l,k}$ est avantageusement exécutée à l'aide d'un calculateur, par exemple un ordinateur, plus particulièrement un ordinateur contrôlant le fonctionnement de la centrale de production d'énergie électrique 10.

Le procédé de détermination du vecteur de conception $\theta$ comprend une étape e) de simulation de mise en oeuvre d'un module temps réel 12, pour chaque profil de puissance $P_{G,l,k}$ déterminé à l'étape d), et considérant que la source d'énergie renouvelable 20 délivre un profil de puissance $P_{Ri}$ déterminé à l'étape b).

Le module temps réel 12 est destiné à ajuster, en temps réel, l'état de charge $SOC(t)$ du système d'accumulation d'énergie 30 de manière à réguler une puissance $P_{E,l,k,i}$, effectivement délivrée par la centrale de production d'énergie électrique 10, conforme au profil de puissance $P_{G,l,k}$.

L'étape e) de simulation comprend également le calcul des m*p écarts relatifs, $S_{l,k,i}$, entre les profils de puissance $P_{E,l,k,i}$, et $P_{G,l,k}$.

Pour chaque écart relatif $S_{l,k,i}$, un indicateur de performance $I_{l,k,i}$ est calculé. L'indicateur de performance $I_{l,k,i}$ est égal à zéro dès lors que l'écart $S_{l,k,i}$ est inférieur à un écart seuil Es, et l'indicateur de performance $I_{l,k,i}$ est égal à un dans le cas contraire. L'écart seuil Es dépend en général des déviations en terme de puissance que le réseau de distribution électrique peut supporter (L'écart seuil Es est par exemple égal 5 %).

L'étape e) est exécutée pour chaque profil de puissance $P_{Ri}$ calculé à l'étape b).

Le procédé de détermination du vecteur de conception $\theta$ comprend une étape f) de calcul, pour chaque couple d'indice l et k, de la somme $I_{l,k} = \sum_{i=1}^{n} I_{l,k,i}$.

Le vecteur de conception θ comprend alors un couple de composantes $(\theta_1, \theta_2)$ sélectionnées parmi les couples de valeurs $(\theta_{1,l}, \theta_{2,k})$ pour lequel la somme $I_{l,k}$ est inférieure à un nombre entier positif q prédéterminé.

Cependant, plusieurs couples de valeurs $(\theta_{1,l}, \theta_{2,k})$ peuvent être sélectionnés à l'issue de l'étape f.

Aussi, dès lors qu'une pluralité de couples $(\theta_{1,l}, \theta_{2,k})$ est sélectionnée à l'étape f), le procédé comprend en outre une étape de sélection supplémentaire d'un couple $(\theta_{1,l}, \theta_{2,k})$ parmi la pluralité de couples sélectionnés. Le couple sélectionné lors de l'étape supplémentaire est le couple $(\theta_{1,l}, \theta_{2,k})$ associé au profil de puissance $P_{G,l,k}$ présentant l'aire la plus importante. Autrement dit, le couple $(\theta_{1,l}, \theta_{2,k})$ sélectionné est celui qui permet d'injecter la plus grande quantité de puissance sur le réseau de distribution d'électricité 40.

De manière avantageuse, le ou les couples de valeurs $(\theta_{1,l}, \theta_{2,k})$ sélectionnés à l'étape f. correspondent à une somme $I_{l,k}$ inférieure à un nombre entier q (le nombre entier est également nommé nombre d'échec).

Aussi dès lors que cette condition n'est pas réalisée (aucune des sommes $I_{l,k}$ n'est inférieure à q), il convient d'exécuter à nouveau le procédé de détermination du vecteur de conception θ en ajustant l'étape b). Plus particulièrement, une condition peut être imposée au nombre n de profils de puissance $P_{Ri}$. Toujours plus particulièrement, le nombre entier n doit respecter l'inégalité suivante, relative aux algorithmes aléatoire (« Randomized Algorithms » selon la terminologie Anglo-Saxonne) :

$$ n \geq \frac{1}{\eta}\left(\frac{e}{e-1}\right)\left(ln\frac{m.p}{\delta} + q\right) $$

η étant un paramètre de précision compris entre 0 et 1, avantageusement inférieur à 0,1, δ un indicateur de confiance compris entre 0 et 1 avantageusement inférieur à 0,1, et « e » le nombre exponentiel.

Le couple de valeurs $(\theta_{1,l}, \theta_{2,k})$, ci-après identifié à $(\theta_1, \theta_2)$, est avantageusement mis en oeuvre dans le cadre du procédé de contrôle d'une centrale de production d'énergie électrique 10.

Le terme $\theta_1$ est un terme de calibration du vecteur de conception θ destiné à donner une préférence à un niveau d'état de charge SOC du système d'accumulation d'énergie 30. Par exemple, $\theta_1$ =0,3 tend à favoriser un état de charge du système d'accumulation à 30 %.

Le terme $\theta_2$ est un terme d'adaptabilité de l'amplitude du profil $P_G$ à déclarer, permettant d'assurer que la puissance $P_G$ ne dépasse pas la prévision de production de puissance $P_R$ moins la puissance $P_{bat}$ consommée par le système d'accumulation d'énergie 30. Le terme $\theta_2$ est particulièrement adapté dans le contexte de l'invention puisqu'il permet de paramétrer de manière optimale, et en tenant compte de l'impact de l'incertitude de la production d'énergie renouvelable (produite par la source d'énergie renouvelable), le procédé de contrôle de la centrale de production électrique selon l'invention. Plus particulièrement, le terme $\theta_2$ permet de garantir un taux d'injection de la puissance effectivement produite par la source d'énergie renouvelable 20 avec un indice de confiance déterminé par ledit terme $\theta_2$.

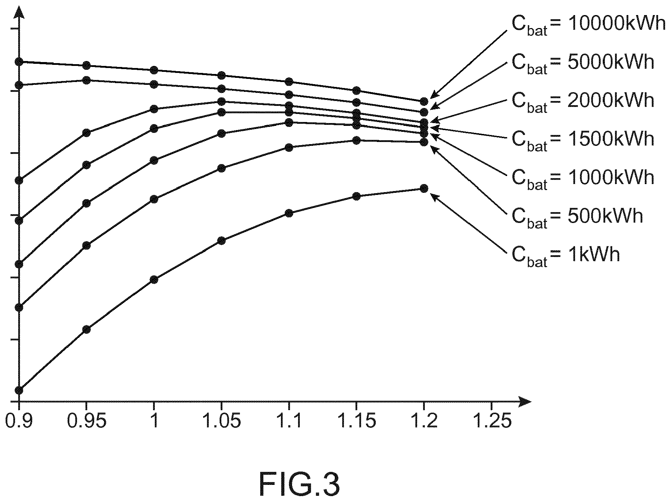

La figure 3 illustre l'effet du paramètre $\theta_2$ sur l'espérance de fourniture de puissance en fonction de la capacité $C_{bat}$ du système d'accumulation d'énergie 30.

Il est clairement observé, pour un système d'accumulation d'énergie de faible capacité de stockage $C_{bat}$ (par exemple 1 kWh), qu'il peut être favorable d'avoir un paramètre $\theta_2$ qui suggère un profil de puissance $P_G$ « supérieur » à la prévision de production de profil de puissance $P_R$. Dès lors que la capacité de stockage augmente, des plus faibles valeurs de $\theta_2$ seront à privilégier.

Le procédé de contrôle d'une centrale de production d'électricité a été mis en oeuvre dans le cadre d'une simulation.

La centrale 10 considérée comprend alors une source d'énergie photovoltaïque et une batterie endogène comme système d'accumulation d'énergie.

Les principaux éléments de régulation (les contraintes) imposés par le gestionnaire du réseau de distribution d'électricité 40 sont les suivants :

- la puissance nominale Pnom de la centrale de production d'électricité doit être supérieure à 100kW,
- l'exploitant de la centrale doit déclarer le profil de puissance $P_G$ 24 heures avant l'instant t0, (début de la période temporelle T),
- les pentes du profil de puissance $P_G$ sont également contraintes,

Il est également offert à l'exploitant de la centrale de déclarer un nouveau profil, à au moins trois reprises, par exemple, dans les 4, 10 et 14 premières heures d'une période T de 24 heures. Ces trois nouvelles déclarations sont notées $P_{G,6-24}$, $P_{G,12-24}$ et $P_{G,16-24}$.

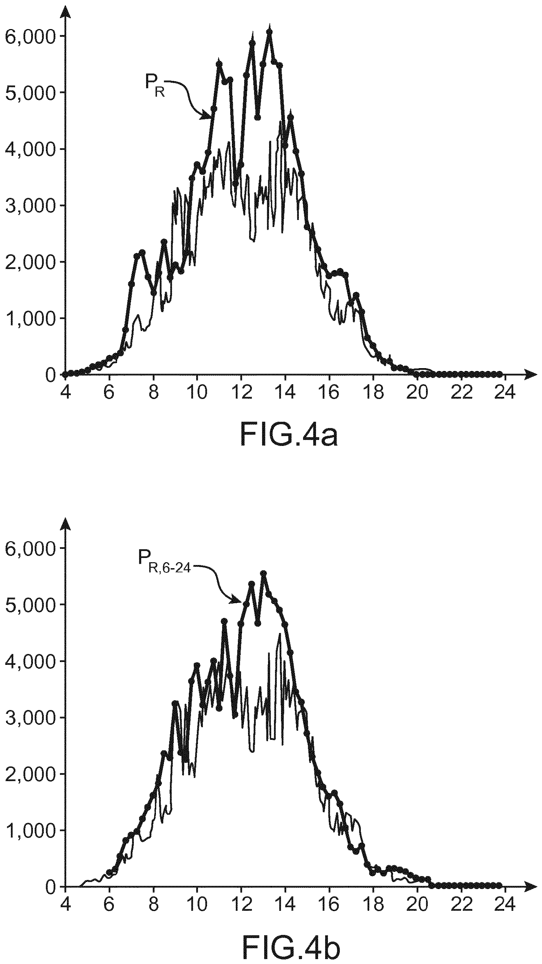

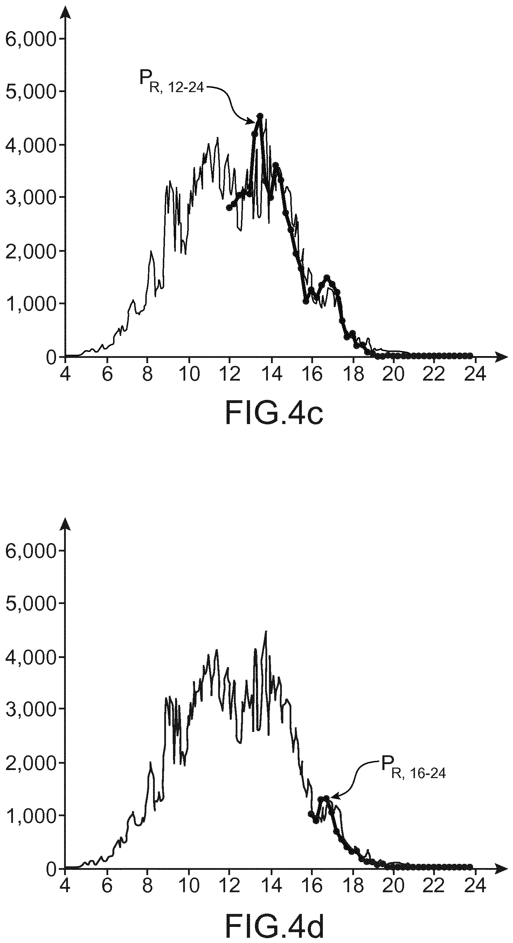

A la figure 4a, la prévision de production de puissance $P_R$ de la figure 4a est déterminée le jour précédant la période T et couvre une période de 24 heures. La prévision de production de puissance $P_{R,6-24}$ de la figure 4b est déterminée dans les 4 premières heures de la période T et couvre une période allant de la sixième à la vingt-quatrième heure de la période T, la prévision de production de puissance $P_{R,\ 12-24}$ de la figure 4c est déterminée dans les 10 premières heures de la période T et couvre une période allant de la douzième à la vingt-quatrième heure de la période T, la prévision de production de puissance $P_{R,\ 16-24}$ de la figure 4d est déterminée dans les 12 premières heures de la période T et couvre une période allant de la seizième à la vingt-quatrième heure de la période T.

Pour une période T donnée, les prévisions de production de puissance $P_R$ par la source d'énergie photovoltaïque sont connues pour s'améliorer dès lors que l'on se rapproche de ladite période T. Ainsi, ces nouvelles prévision permettent d'ajuster au mieux le profil déclaré. Cet effet est très clairement observé aux figures 4a-4d.

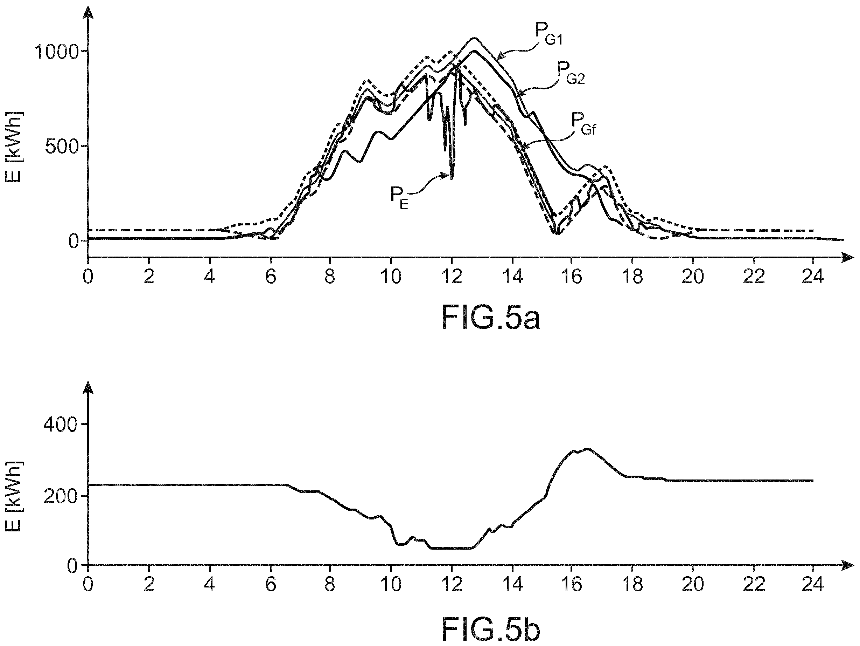

Les figures 5a-5b représentent également la mise en oeuvre d'une simulation du procédé de contrôle de la centrale de production d'électricité selon la présente invention.

La figure 5a représente les profils de puissance $P_{G1}$ initialement déclaré la veille à 16 heures, et $P_{G2}$ déclaré le jour même à 4 heure au gestionnaire du réseau de distribution d'électricité 40. Un écart notable est observé entre les profils $P_{G1}$, $P_{G2}$ et le profil $P_E$. Le profil $P_{Gf}$ correspond à un profil sur lequel l'exploitant de la centrale de production s'est finalement engagé auprès du gestionnaire du réseau de distribution d'électricité 40. Les profils $P_E$ et $P_{Gf}$ sont relativement similaires (le contrôleur en temps-réel 12 maintien la puissance $P_E$ dans la marge de tolérance imposée par le gestionnaire de réseau symbolisée par les courbes traits interrompus) à l'exception d'une période autour de midi. Cet écart significatif autour de midi correspond également à un état de charge du système d'accumulation d'énergie égal à la limite inférieure de l'état de charge du système d'accumulation (figure 5b). Cet exemple montre un fois encore l'intérêt de pourvoir re-déclarer le profil $P_G$ lors du déroulement de la période T.

Le procédé de contrôle d'une centrale de production d'électricité permet ainsi de garantir avec un indice de confiance déterminé par un vecteur de conception $\theta$ de pouvoir garantir une injection maximale de puissance dans un réseau de distribution électrique. Le vecteur de conception $\theta$ est ainsi déterminé de sorte que la probabilité de dépasser un écart seuil Es entre les profils $P_E$ et $P_G$ soit inférieure à $\eta$. Plus particulièrement, le procédé de contrôle selon l'invention permet à l'exploitant de la centrale de s'engager sur un profil de puissance $P_G$ soumis à des contraintes imposées par le gestionnaire du réseau de distribution électrique. En effet, la calibration de la méthode pour l'obtention d'un vecteur de conception $\theta$, par une approche stochastique, permet de prendre en compte le caractère intermittent des source d'énergie renouvelable.

## RÉFÉRENCES

[1] E.B. Iversen et al., "Probabilistic forecasts of solar irradiance using stochastic differential équations", Environmetrics, ,25(3), May 2014, pages 152-164.

## Revendications

1. Procédé de contrôle d'une centrale de production d'énergie électrique (10) comprenant au moins une source d'énergie renouvelable (20), au moins un système d'accumulation d'énergie (30), le procédé comprenant :

   une étape de détermination, par un module optimal (11), d'un profil de puissance $P_G$ à déclarer, le profil de puissance $P_G$ étant un profil d'une puissance destiné à être délivrée sur une période temporelle T, débutant à un instant $t_0$, par la centrale de production d'énergie électrique (10), le profil de puissance $P_G$ étant déterminé par rapport à une prévision de production de profil de puissance $P_R$ de l'au moins une source d'énergie renouvelable (20), et correspondant à un profil de puissance P(t) permettant de maximiser une fonction objectif F de la forme :

   $$F = \sum_{t=t_0}^{t_0+T} \left( P(t) - \rho.\|SOC(t) - \theta_1.C_{bat}\| \right)$$

   P(t) étant une puissance à un instant t de la période T, SOC(t) un état de charge, ajustable, du système d'accumulation d'énergie (30) à un instant t de la période T, $\rho$ est un facteur de pondération, et $C_{bat}$ étant la capacité du système d'accumulation d'énergie (30),
   le profil de puissance $P_G$ étant soumis à une contrainte de la forme :

$$P_G \leq \theta_2 . P_R - P_{bat}$$

$P_{bat}$ étant la puissance consommée par le système d'accumulation d'énergie (30),
les grandeurs $\theta_1$ et $\theta_2$ correspondant à des composantes d'un vecteur de conception $\theta$ prédéterminé.

2. Procédé selon la revendication 1, dans lequel le procédé comprend en outre une étape de régulation, exécutée par un module temps réel (12), destiné à ajuster, en temps réel, l'état de charge SOC(t) de manière à réguler une puissance $P_E$, effectivement délivrée par la centrale de production d'énergie électrique (10), conforme, et dans une plage de tolérance donnée, au profil de puissance $P_G$.

3. Procédé selon la revendication 1 ou 2, dans lequel l'état de charge SOC(t) du système d'accumulation d'énergie doit respecter la contrainte suivante pour chaque instant t de la période T :

$$0{,}05 . C_{bat} \leq SOC(t) \leq 0{,}95 . C_{bat}$$

4. Procédé selon l'une des revendications 1 à 3, dans lequel la puissance $P_{bat}$ consommée par le système d'accumulation d'énergie (30) est maintenu entre une puissance minimale $P_{batmin}$ et une puissance maximale $P_{batmax}$.

5. Procédé selon l'une des revendications 1 à 4, dans lequel l'état de charge SOC(t) à chaque instant t varie selon une fonction linéaire de la puissance $P_{bat}$ consommée, avantageusement, l'état de charge SOC(t) est tel que :

$$SOC(t) = SOC_0 + \alpha . \sum_{\tau = t_0}^{t} P_{bat}^{\tau}$$

$SOC_0$ étant l'état de charge à l'instant $t_0$, $P_{bat}^{\tau}$ étant la puissance consommée par le système d'accumulation (30) à l'instant $\tau$, et $\alpha$ un paramètre fixe caractéristique du système d'accumulation d'énergie (30).

6. Procédé selon l'une des revendications 1 à 5, dans lequel la pente en tout point du profil de puissance $P_G$ est bornée par une pente négative $dP_{G-}$ et une pente positive $dP_{G+}$.

7. Procédé selon l'une des revendications 1 à 6, dans lequel le procédé comprend en outre la détermination du vecteur de conception $\theta$, la détermination du vecteur de conception comprenant :

a) une étape de sélection, sur une période Tp passée débutant à un instant $t_0$, d'une prévision de production de profil de puissance $P_{RP}$, de l'au moins une source d'énergie renouvelable (20),
b) une étape de calcul, pour la prédiction de production de profil de puissance $P_{RP}$, d'un nombre n, entier, de profils de puissance $P_{Ri}$, avec i variant entre 1 et n, les profils de puissance $P_{Ri}$ rendant chacun compte d'une incertitude dont est entachée la prévision $P_{RP}$,
c) une étape de définition d'un premier ensemble de m valeurs $\theta_{1,l}$, l étant un nombre entier variant entre 1 et m, et d'un second ensemble de p valeurs $\theta_{2,k}$, k étant un nombre entier variant entre 1 et p,
d) une étape de calcul, pour la période Tp, pour chacun des m*p couples de valeurs $(\theta_{1,l}, \theta_{2,k})$, l et k variant respectivement entre 1 et m, et entre 1 et p, d'un profil de puissance $P(t)_{l,k}$, noté $P_{G,l,k}$ et maximisant une fonction $F_{l,k}$

$$F_{l,k} = \sum_{t = t_0}^{t_0 + Tp} \left( P(t)_{l,k} - \rho . \left\| SOC(t) - \theta_{1,l} . C_{bat} \right\| \right)$$

et $P_{G,l,k}$ respectant la contrainte

$$P_{G,l,k} \leq \theta_{2,k} . P_R - P_{bat}$$

ρ étant un facteur de pondération, et SOC(t) et $C_{bat}$ étant, respectivement, un état de charge ajustable et une capacité du système d'accumulation d'énergie (30),

e) une étape de simulation de mise en oeuvre d'un module temps réel (12), pour chaque profil de puissance $P_{G,l,k}$ déterminé à l'étape d), et considérant que la source d'énergie renouvelable (20) délivre un profil de puissance $P_{Ri}$ déterminé à l'étape b), le module temps réel (12) étant destiné à ajuster, en temps réel, l'état de charge SOC(t) du système d'accumulation d'énergie (30) de manière à réguler une puissance $P_{E,l,k,i}$, effectivement délivrée par la centrale de production d'énergie électrique (10), conforme au profil de puissance $P_{G,l,k}$, l'étape de simulation comprenant également le calcul des m*p écarts relatifs, $S_{l,k,i}$, entre les profils de puissance $P_{E,l,k,i}$, et $P_{G,l,k}$, un indicateur de performance $I_{l,k,i}$ égal à zéro étant attribué à l'écart relatif $S_{l,k,i}$, dès lors que ledit écart est inférieur à un écart seuil Es, l'indicateur de performance $I_{l,k,i}$ étant égal à un dans le cas contraire, l'étape e) étant exécutée pour chaque profil de puissance $P_{Ri}$ calculé à l'étape b)

f) une étape de calcul, pour chaque couple d'indice l et k, de la somme $I_{l,k} = \sum_{i=1}^{n} I_{l,k,i}$ , le vecteur de conception θ comprenant un couple de composantes ($θ_1$, $θ_2$) sélectionnées parmi les couples de valeurs ($θ_{1,l}$ $θ_{2,k}$) pour lequel la somme $I_{l,k}$ est inférieure à un nombre entier positif q prédéterminé.

8. Procédé selon la revendication 7, dans lequel dès lors qu'une pluralité de couples ($θ_{1,l}$, $θ_{2,k}$) est sélectionnée à l'étape f), le procédé comprend en outre une étape de sélection supplémentaire d'un couple ($θ_{1,l}$ $θ_{2,k}$) parmi la pluralité de couples sélectionnés, le couple sélectionné lors de l'étape supplémentaire étant le couple ($θ_{1,l}$ $θ_{2,k}$) associé au profil de puissance $P_{G,l,k}$ présentant l'aire la plus importante.

9. Procédé selon la revendication 7 ou 8, dans lequel le nombre n de profils de puissance $P_{Ri}$, est tel que :

$$n \geq \frac{1}{\eta}\left(\frac{e}{e-1}\right)\left(ln\frac{m.p}{\delta} + q\right)$$

η étant un paramètre de précision compris entre 0 et 1, avantageusement inférieur à 0,1, δ un indicateur de confiance compris entre 0 et 1 avantageusement inférieur à 0,1.

10. Procédé selon l'une des revendications 7 à 9, dans lequel le premier ensemble de m valeurs $θ_{1,l}$ comprend l'ensemble de valeurs {0,3 ; 0,5 ; 0,7}.

11. Procédé selon l'une des revendications 7 à 10, dans lequel le second ensemble de p valeurs $θ_{2,k}$ comprend l'ensemble de valeurs {0,9 ; 0,95 ; 1 ; 1,05 ; 1,1}.

**Patentansprüche**

1. Verfahren zum Steuern eines Stromerzeugungskraftwerks (10), enthaltend zumindest eine erneuerbare Energiequelle (20) und zumindest ein Energiespeichersystem (30), wobei das Verfahren umfasst:

einen Schritt des Bestimmens eines zu deklarierenden Leistungsprofils $P_G$ durch ein optimales Modul (11), wobei das Leistungsprofil $P_G$ ein Profil einer Leistung ist, die über einen Zeitraum T ab einem Zeitpunkt $t_0$ von dem Stromerzeugungskraftwerk (10) geliefert werden soll, wobei das Leistungsprofil $P_G$ in Bezug auf eine Prognose der Erzeugung des Leistungsprofils $P_R$ der zumindest einen erneuerbaren Energiequelle (20) bestimmt wird und einem Leistungsprofil P(t) entspricht, mit dem eine Zielfunktion F maximiert werden kann mit der Form:

$$F = \sum_{t=t_0}^{t_0+T} (P(t) - \rho.\|\boldsymbol{SOC(t)} - \theta_1.C_{bat}\|)$$

wobei P(t) eine Leistung zu einem Zeitpunkt t des Zeitraums T ist, SOC(t) ein abstimmbarer Ladezustand des Energiespeichersystems (30) zu einem Zeitpunkt t des Zeitraums T ist, ρ ein Gewichtungsfaktor ist und $C_{bat}$ die Kapazität des Energiespeichersystems (30) ist, wobei das Leistungsprofil $P_G$ einer Vorgabe unterliegt mit der Form:

$$P_G \leq \theta_2 \,.\, P_R - P_{bat}$$

wobei $P_{bat}$ die vom Energiespeichersystem (30) verbrauchte Energie ist,
wobei die Größen $\theta_1$ und $\theta_2$ Komponenten eines vorbestimmten Auslegungsvektors $\theta$ entsprechen.

2. Verfahren nach Anspruch 1, wobei das Verfahren ferner einen Regelungsschritt umfasst, der von einem Echtzeitmodul (12) ausgeführt wird, das dazu bestimmt ist, den Ladezustand SOC(t) in Echtzeit so abzustimmen, dass eine von dem Stromerzeugungskraftwerk (10) effektiv gelieferte Leistung $P_E$ konform und in einem vorgegebenen Toleranzbereich mit dem Leistungsprofil $P_G$ geregelt wird.

3. Verfahren nach Anspruch 1 oder 2, wobei der Ladezustand SOC(t) des Energiespeichersystems für jeden Zeitpunkt t des Zeitraums T die nachstehende Vorgabe erfüllen muss:

$$0{,}05 \,.\, C_{bat} \leq SOC(t) \leq 0{,}95 \,.\, C_{bat}$$

4. Verfahren nach einem der Ansprüche 1 bis 3, wobei die von dem Energiespeichersystem (30) verbrauchte Leistung $P_{bat}$ zwischen einer minimalen Leistung $P_{batmin}$ und einer maximalen Leistung $P_{batmax}$ gehalten wird.

5. Verfahren nach einem der Ansprüche 1 bis 4, wobei der Ladezustand SOC(t) zu jedem Zeitpunkt t gemäß einer linearen Funktion der verbrauchten Leistung $P_{bat}$ variiert, wobei der Ladezustand SOC(t) vorzugsweise derart ist, dass

$$SOC(t) = SOC_0 + \alpha \,.\, \sum\nolimits_{\tau=t_0}^{t} P_{bat}^{\tau}$$

wobei $SOC_0$ der Ladezustand zum Zeitpunkt to ist, $P_{bat}^{\tau}$ die von dem Speichersystem (30) zum Zeitpunkt $\tau$ verbrauchte Leistung ist und $\alpha$ ein charakteristischer fester Parameter des Energiespeichersystems (30) ist.

6. Verfahren nach einem der Ansprüche 1 bis 5, wobei die Steigung an jedem Punkt des Leistungsprofils $P_G$ von einer negativen Steigung $d_{PG-}$ und einer positiven Steigung $dP_{G+}$ begrenzt wird.

7. Verfahren nach einem der Ansprüche 1 bis 6, wobei das Verfahren ferner das Bestimmen des Auslegungsvektors $\theta$ umfasst, wobei das Bestimmen des Auslegungsvektors umfasst:

a) einen Schritt des Auswählens der Prognose der Erzeugung des Leistungsprofils $P_{RP}$ der zumindest einen erneuerbaren Energiequelle (20) über einen vergangenen Zeitraum $T_P$ ab einem Zeitpunkt $t_0$,
b) einen Schritt des Berechnens einer ganzen Zahl n an Leistungsprofilen $P_{Ri}$ für die Vorhersage der Erzeugung des Leistungsprofils $P_{RP}$, wobei i zwischen 1 und n variiert,
wobei die Leistungsprofile $P_{Ri}$ jeweils eine Unsicherheit widerspiegeln, mit der die Prognose $P_{RP}$ behaftet ist,
c) einen Schritt des Definierens von einer ersten Menge von m Werten $\theta_{1,l}$, wobei l eine ganze Zahl zwischen 1 und m ist, sowie von einer zweiten Menge von p Werten $\theta_{2,k}$, wobei k eine ganze Zahl zwischen 1 und p ist,
d) einen Schritt des Berechnens eines Leistungsprofils $P(t)_{l,k}$, das mit $P_{G,l,k}$ bezeichnet ist und eine Funktion $F_{l,k}$ maximiert, für den Zeitraum Tp für jedes der m*p Paare von Werten $(\theta_{1,l}\ \theta_{2,k})$, wobei l und k zwischen 1 und m bzw. zwischen 1 und p variieren,

$$F_{l,k} = \sum_{t=t_0}^{t_0+Tp} (P(t)_{l,k} - \rho.\lVert \boldsymbol{SOC(t)} - \theta_{1,l}.C_{bat} \rVert)$$

und $P_{G,l,k}$ die Vorgabe erfüllt

$$P_{G,l,k} \leq \theta_{2,k} \,.\, P_R - P_{bat}$$

wobei ρ ein Gewichtungsfaktor ist und SOC(t) und $C_{bat}$ der abstimmbare Ladezustand bzw. eine Kapazität des Energiespeichersystems (30) sind,

e) einen Schritt der Simulation der Implementierung eines Echtzeitmoduls (12) für jedes in Schritt d) bestimmte Leistungsprofil $P_{G,l,k}$ und unter der Maßgabe, dass die erneuerbare Energiequelle (20) ein in Schritt b) bestimmtes Leistungsprofil $P_{Ri}$ liefert, wobei das Echtzeitmodul (12) dazu bestimmt ist, in Echtzeit den Ladezustand SOC(t) des Energiespeichersystems (30) so abzustimmen, dass eine von dem Stromerzeugungskraftwerk (10) effektiv gelieferte Leistung $P_{E,l,k,i}$, konform mit dem Leistungsprofil $P_{G,l,k}$, geregelt wird, wobei der Schritt der Simulation auch das Berechnen der m*p relativen Abweichungen $S_{l,k,i}$ zwischen den Leistungsprofilen $P_{E,l,k,i}$ und $P_{G,l,k}$ umfasst, wobei ein Leistungsindikator $I_{l,k,i}$ gleich null der relativen Abweichung $S_{l,k,i}$ zugewiesen wird, wenn die Abweichung geringer als eine Schwellwertabweichung Es ist, wobei andernfalls der Leistungsindikator $I_{l,k,i}$ gleich eins ist, wobei der Schritt e) für jedes in Schritt b) berechnete Leistungsprofil $P_{Ri}$ ausgeführt wird,

f) einen Schritt des Berechnens der Summe $I_{l,k} = \sum_{i=1}^{n} I_{l,k,i}$ für jedes Paar mit Index l und k, wobei der Auslegungsvektor θ ein Paar von aus Wertepaaren $(\theta_{1,l}\,\theta_{2,k})$ ausgewählten Komponenten $(\theta_1, \theta_2)$ umfasst, bei dem die Summe $I_{l,k}$ kleiner als eine vorbestimmte positive ganze Zahl q ist.

8. Verfahren nach Anspruch 7, wobei dann, wenn eine Mehrzahl von Paaren $(\theta_{1,l}\,\theta_{2,k})$ in Schritt f) ausgewählt ist, das Verfahren ferner einen zusätzlichen Schritt des Auswählens eines Paares $(\theta_{1,l}\,\theta_{2,k})$ aus der Mehrzahl von ausgewählten Paaren umfasst, wobei das beim zusätzlichen Schritt ausgewählte Paar das Paar $(\theta_{1,l}\,\theta_{2,k})$ ist, das dem Leistungsprofil $P_{G,l,k}$ mit dem größten Ausmaß zugeordnet ist.

9. Verfahren nach Anspruch 7 oder 8, wobei die Anzahl n an Leistungsprofilen $P_{Ri}$ derart ist, dass:

$$n \geq \frac{1}{\eta} \left( \frac{e}{e-1} \right) \left( ln \frac{m.p}{\delta} + q \right)$$

wobei η ein Präzisionsparameter zwischen 0 und 1, vorteilhaft kleiner als 0,1 ist, δ ein Vertrauensindikator zwischen 0 und 1, vorteilhaft kleiner als 0,1, ist.

10. Verfahren nach einem der Ansprüche 7 bis 9, wobei die erste Menge von m Werten $\theta_{1,l}$ die Wertemenge {0,3; 0,5; 0,7} umfasst.

11. Verfahren nach einem der Ansprüche 7 bis 10, wobei die zweite Menge von p Werten $\theta_{2,kl}$ die Wertemenge {0,9; 0,95; 1; 1,05; 1,1} umfasst.

## Claims

1. A method for controlling an electric power generating plant (10) comprising at least one renewable energy source (20), at least one energy storage system (30), the method comprising:

a step of determining, by an optimal module (11), a power profile $P_G$ to report, the power profile $P_G$ being a profile of a power intended to be delivered over a time period T, starting at a time $t_0$, by the electric power generating plant (10), the power profile $P_G$ being determined with respect to a power profile generation forecast $P_R$ of the at least one renewable energy source (20), and corresponding to a power profile P(t) allowing to maximize an objective function F having the form:

$$F = \sum_{t=t_0}^{t_0+T} (P(t) - \rho . \| SOC(t) - \theta_1 . C_{bat} \|)$$

P(t) being a power at a time t of the period T, *SOC*(t) being a state of charge, which is adjustable, of the energy storage system (30) at a time t of the period T, ρ is a weighting factor, and $C_{bat}$ is the capacity of the energy storage system (30),

the power profile $P_G$ being subjected to a constraint of the form:

$$P_G \leq \theta_2 . P_R - P_{bat}$$

$P_{bat}$ being the power consumed by the energy storage system (30),
the magnitudes $\theta_1$ and $\theta_2$ corresponding to components of a predetermined design vector $\theta$.

2. The method according to claim 1, wherein the method further comprises a regulation step, executed by a real-time module (12), intended to adjust, in real time, the state of charge SOC(t) so as to regulate a power $P_E$, actually delivered by the electric power generating plant (10), which is compliant, within a given range of tolerance, with the power profile $P_G$.

3. The method according to claim 1 or 2, wherein the state of charge SOC(t) of the energy storage system must satisfy the following constraint for every time t of the period T:

$$0.05 . C_{bat} \leq SOC(t) \leq 0.95 . C_{bat}$$

4. The method according to any one of claims 1 to 3, wherein the power $P_{bat}$ consumed by the energy storage system (30) is maintained between a minimum power $P_{batmin}$ and a maximum power $P_{batmax}$.

5. The method according to any one of claims 1 to 4, wherein the state of charge SOC(t) at each time t varies according to a linear function of the consumed power $P_{bat}$, advantageously, the state of charge SOC(t) is such that:

$$SOC(t) = SOC_0 + \alpha . \sum_{\tau = t_0}^{t} P_{bat}^\tau$$

$SOC_0$ being the state of charge at the time $t_0$, $P_{bat}^\tau$ being the power consumed by the storage system (30) at time $\tau$, and $\alpha$ has a fixed parameter characteristic of the energy storage system (30).

6. The method according to any one of claims 1 to 5, wherein the slope at any point in the power profile $P_G$ is bounded by a negative slope $dP_{G-}$ and a positive slope $dP_{G+}$.

7. The method according to any one of claims 1 to 6, wherein the method further comprises the determination of the design vector $\theta$, the determination of the design vector comprising:

a) a step of selecting, over a past period Tp starting at a time $t_0$, a power profile generation forecast $P_{RP}$, of the at least one renewable energy source (20),
b) a step of calculating, for the power profile generation forecast $P_{RP}$, an integer n of power profiles $P_{Ri}$, with i varying between 1 and n, the power profiles $P_{Ri}$ each reporting on an uncertainty in the forecast $P_{RP}$,
c) a step of defining a first set of m values $\theta_{1,l}$, l being an integer varying between 1 and m, and a second set of p values $\theta_{2,k}$, k being an integer varying between 1 and p,
d) a step of calculating, for the period Tp, for each of the m*p pairs of values $(\theta_{1,l} \theta_{2,k})$, l and k varying respectively between 1 and m, and between 1 and p, a power profile $P(t)_{l,k}$, noted $P_{G,l,k}$ and maximizing a function $F_{l,k}$

$$F_{l,k} = \sum_{t = t_0}^{t_0 + T_p} \left( P(t)_{l,k} - \rho . \left\| SOC(t) - \theta_{1,l} . C_{bat} \right\| \right)$$

and $P_{G,l,k}$ satisfying the constraint

$$P_{G,l,k} \leq \theta_{2,k} . P_R - P_{bat}$$

$\rho$ being a weighting factor, and SOC(t) and $C_{bat}$ being, respectively, an adjustable state of charge and a capacity of the energy storage system (30),

e) a step of simulating an implementation of a real-time module (12), for each power profile $P_{G,l,k}$ determined in step d), and considering that the renewable energy source (20) delivers a power profile $P_{Ri}$ determined in step b), the real-time module (12) being intended to adjust, in real time, the state of charge SOC(t) of the energy storage system (30) so as to regulate a power $P_{E,l,k,i}$, actually delivered by the electric power generating plant (10), which is compliant with the power profile $P_{G,l,k}$, the simulation step also comprising the calculation of the m*p relative deviations, $S_{l,k,i}$, between the power profiles $P_{E,l,k,i}$ and $P_{G,l,k}$, a performance indicator $I_{l,k,i}$ equal to zero being attributed to the relative deviation $S_{l,k,i}$, since said deviation is less than a threshold deviation Es, the performance indicator $I_{i,k,i}$ being otherwise equal to one, step e) being executed for each power profile $P_{Ri}$ calculated in step b),

f) a step of calculating, for each pair of indices 1 and k, the sum $I_{l,k} \sum_{i=1}^{n} I_{l,k,i}$, the design vector $\theta$ comprising a pair of components $(\theta_1, \theta_2)$ selected from the pairs of values $(\theta_{1,l} \theta_{2,k})$ for which the sum $I_{l,k}$ is less than a predetermined positive integer q.

8. The method according to claim 7, wherein, once a plurality of pairs $(\theta_{1,l} \theta_{2,k})$ is selected in step f), the method further comprises an additional step of selecting a pair $(\theta_{1,l} \theta_{2,k})$ among the plurality of selected pairs, the pair selected during the additional step being the pair $(\theta_{1,l} \theta_{2,k})$ associated with the power profile $P_{G,l,k}$ having the largest area.

9. The method according to claim 7 or 8, wherein the number n of power profiles $P_{Ri}$, is such that:

$$n \geq \frac{1}{\eta} \left(\frac{e}{e-1}\right) \left(ln \ \frac{m.p}{\delta} + q\right)$$

$\eta$ being a precision parameter comprised between 0 and 1, advantageously less than 0.1, $\delta$ being a confidence indicator comprised between 0 and 1 advantageously less than 0.1.

10. The method according to any one of claims 7 to 9, wherein the first set of m values $\theta_{1,l}$ comprises the set of values {0.3; 0.5; 0.7}.

11. The method according to any one of claims 7 to 10, wherein the second set of p values $\theta_{2,k}$ comprises the set of values {0,9; 0.95; 1; 1.05; 1.1}.

10

11

12

20                              30

40

# FIG.1

a)

b)

c)

d)

e)

f)

# FIG.2

FIG.3

FIG.4a

FIG.4b

FIG.4c

FIG.4d

FIG.5a

FIG.5b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8996187 B

- FR 2996695

**Littérature non-brevet citée dans la description**

- **E.B. IVERSEN et al.** Probabilistic forecasts of solar irradiance using stochastic differential équations. *Environmetrics,* Mai 2014, vol. 25 (3), 152-164